# EUROPÄISCHE PATENTSCHRIFT

(11) **EP 1 301 825 B1**
(45) Veröffentlichungstag und Bekanntmachung des Hinweises auf die Patenterteilung: **21.03.2007**
(21) Anmeldenummer: 01969338.1
(22) Anmeldetag: 05.07.2001
(51) Int. Cl.: G03B 15/00, G03B 37/04, G01C 11/02

(54) **KAMERASYSTEM MIT MINDESTENS ZWEI ERSTEN UND ZWEITEN KAMERAS**
CAMERA SYSTEM WITH AT LEAST TWO FIRST AND SECOND CAMERAS
SYSTEME DE CAMERAS COMPRENANT AU MOINS DEUX PREMIERES ET SECONDES CAMERAS

(30) Priorität: 14.07.2000 DE 10034601
(43) Veröffentlichungstag der Anmeldung: 16.04.2003
(73) Patentinhaber: Z/I Imaging Ltd., Building 99 Shannon Free Zone Shannon, County Clare (IE)
(72) Erfinder: HÜLL, Johann, 89542 Bolheim (DE); TRUNZ, Michael, 73479 Ellwangen (DE)
(74) Vertreter: Schmid, Wolfgang
(86) Internationale Anmeldenummer: PCT/EP2001/007693
(87) Internationale Veröffentlichungsnummer: WO 2002/006892

(56) Entgegenhaltungen:
- EP-A- 0 982 946
- DE-A- 4 420 422
- DE-C- 299 786
- US-A- 1 735 109
- US-A- 1 797 849

## Beschreibung

Die Erfindung betrifft ein Kamerasystem für photogrammetrische Anwendungen sowie für Anwendungen in der Luftaufklärung.

Die DE 44 20 422 A1 beschreibt ein technisches Komplexauge für dynamisches, maschinelles Sehen, insbesondere für Fahrzeuge, mit einer um zwei Achsen drehbaren und steuerbaren Plattform, auf der drei oder mehrere abbildende Sensoren angeordnet sind, wobei auf der Plattform zwei Weitwinkelkameras derart angeordnet sind, dass ihre optischen Achsen in Richtung der Sichtachse des Komplexauges divergieren und sich ihre Sichtbereiche vor der Plattform überlappen und wobei eine Telekamera auf den Bereich ausgerichtet ist, in dem sich die Sichtbereiche der Weitwinkelkameras überlappen. Dabei kann auch eine zweite Telekamera vorgesehen sein.

Sowohl in der Photogrammetrie als auch in der Luftaufklärung werden zunehmend digitale Kameras eingesetzt. Dabei besteht einerseits der Wunsch nach hoher Ortsauflösung der aufzunehmenden Bilder und andererseits der Wunsch nach Aufnahme von Farbinformation. Maximale Ortsauflösung ist gegenwärtig mit panchromatischen Kameras, die letztendlich nur die Aufzeichnung von schwarz-weiß-Information ermöglichen, erreichbar.

Da weiterhin der für das gesamte Kamerasystem in Flugzeugen zur Verfügung stehende Bauraum begrenzt ist, besteht der Wunsch nach einer kompakten Anordnung mehrerer Kameras.

Diesen Bedürfnissen wird die vorliegende Erfindung durch ein Kamerasystem mit den Merkmalen des Anspruches 1 gerecht. Vorteilhafte Ausgestaltungen der Erfindung ergeben sich aus den Merkmalen der abhängigen Ansprüche.

Das erfindungsgemäße Kamerasystem weist mindestens zwei erste Kameras auf, die jeweils ein eigenes Objektiv aufweisen, deren optische Achsen geneigt zueinander angeordnet sind. Das Kamerasystem weist weiterhin mindestens zwei weitere Kameras auf, die in Blickrichtung der ersten Kameras zu diesen ersten Kameras versetzt angeordnet sind. Die ersten Kameras sind dabei panchromatische digitale Kameras, durch die die Aufnahme des zu vermessenden Geländes mit hoher lateraler Auflösung, jedoch ohne Farbinformation erfolgt. Die zweiten Kameras sind als multichromatische digitale Kameras ausgelegt, durch die auch die Farbinformation des überflogenen Geländes, wenn auch mit geringerer lateraler Auflösung, aufgezeichnet wird. Für die spätere photogrammetrische Auswertung der mit dem Kamerasystem aufgezeichneten Bildinformation weisen sämtliche Öffnungskegel der ersten und zweiten Kameras einen gemeinsamen, zentralen, überlappenden Bereich auf.

Bei einem vorteilhaften Ausfiihrungsbeispiel sind mindestens drei erste Kameras symmetrisch zu einer Symmetrieachse angeordnet und die zweiten Kameras in Richtung dieser Symmetrieachse versetzt zu den ersten Kameras angeordnet.

Besonders vorteilhaft sind insgesamt vier erste Kameras symmetrisch zu einer Symmetrieachse angeordnet. Durch vier Kameras läßt sich eine hohe Bildabdeckung, also ein großer simultan erfaßter Winkelbereich erzielen.

Weiterhin vorzugsweise sind auch vier zweite Kameras vorgesehen, die ebenfalls symmetrisch zur Symmetrieachse der ersten Kameras angeordnet sind. Die optischen Achsen der zweiten Kameras können dabei parallel zueinander ausgerichtet sein.

Weitere Einzelheiten der Erfindung werden nachfolgend anhand des in den Figuren dargestellten Ausfbhrungsbeispiels näher erläutert. Dabei zeigen:
- Figur 1: ein erfindungsgemäßes Kamerasystem im Schnitt und
- Figur 2: eine perspektivische Darstellung des Kamerasystems aus Figur 1.

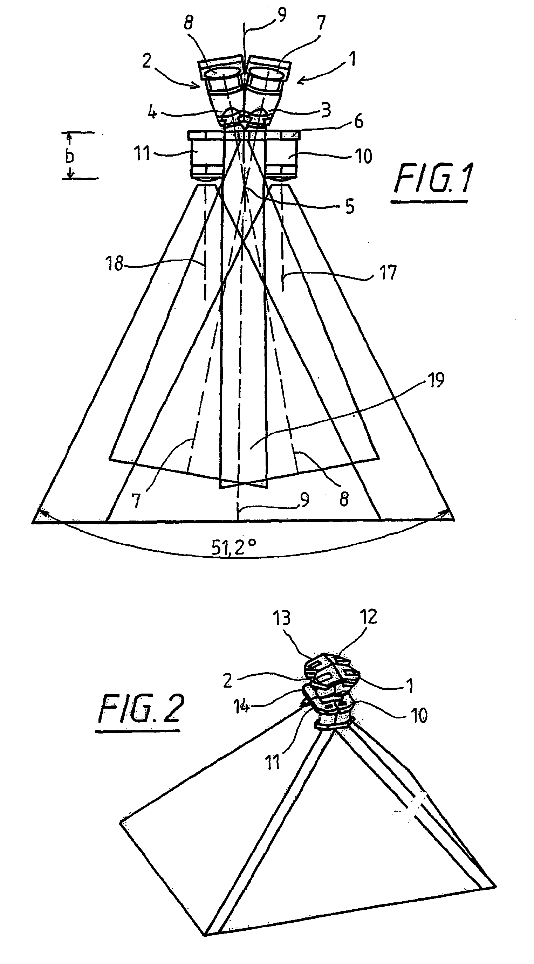

Das Kamerasystem in den Figuren 1 und 2 weist vier erste Kameras (1,2,12,13) und vier zweite Kameras (10,11,14) auf, wobei die zweiten Kameras (10,11,14) in Blickrichtung der ersten Kameras (1,2,12,13) versetzt zu den ersten Kameras (1,2,12,13) angeordnet sind. Jede dieser vier ersten und zweiten Kameras enthält dabei ein Gehäuse, ein an jedem Gehäuse aufgenommenes Objektiv und einen hinter dem jeweiligen Objektiv angeordneten CCD-Bildsensor. Die nicht dargestellten Bildsensoren der ersten Kameras (1,2,12,13) sind dabei als panchromatische CCD-Bildsensoren mit höchster lateraler Auflösung ausgelegt. Die CCD-Sensoren der zweiten Kameras (14,15,16) sind als hochauflösende Farbkamerachips ausgebildet.

An dieser Stelle sei darauf hingewiesen, daß das gesamte Kamerasystem noch eine vierte zweite Kamera aufweist, die in der perspektivischen Darstellung der Figur 2 nicht dargestellt ist, da sie von einer der ersten Kameras (12) verdeckt ist.

Die vier ersten Kameras (1,2,12,13) sind zu einer Symmetrieachse (9) symmetrisch angeordnet. Die ersten Kameras (1,2,12,13) sind dabei zueinander und relativ zur Symmetrieachse (9) um gleiche Winkelbeträge geneigt zueinander angeordnet, so daß sich die optischen Achsen (7,8) der ersten Kameras in einem gemeinsamen Schnittpunkt (5), der auf der Symmetrieachse (9) liegt, schneiden.

Durch die zueinander geneigte Anordnung der ersten Kameras (1,2) entsteht unmittelbar vor den Objektiven (3,4) der ersten Kameras ein Bereich (b), in dem die die Öffnungskegel der ersten Kameras kleinste Einhüllende eine Einschnürung in Lateralrichtung, also in Richtung senkrecht zur Symmetrieachse (9), aufweist. In diesem Bereich (b) ist der Durchmesser der die Öffnungskegel der ersten Kameras (1,2) Einhüllenden konstant. In diesem Bereich, in dem die die Öffnungskegel der ersten Kameras (1,2) Einhüllende einen im wesentlichen konstanten Durchmesser aufweist, sind die zweiten Kameras (10,11) derart angeordnet, daß durch die Gehäuse der zweiten Kameras (10,11) die Öffnungskegel der ersten Kameras (1,2) nicht beschnitten werden. Die Tragstruktur (6) für die zweiten Kameras (10,11) weist dazu eine entsprechend große Öffnung für den freien Durchtritt der Öffnungskegel der ersten Kameras auf.

Die optischen Achsen (17,18) der zweiten Kameras (10,11) sind parallel zur Symmetrieachse (9) ausgerichtet.

In einem zentralen Bereich (19) überlappen die Öffnungskegel sämtlicher ersten Kameras (1,2) und zweiten Kameras (10,11).

Die Objektive (3,4) der ersten Kameras sind so ausgelegt, daß jede der ersten Kameras einen Bildwinkel von mindestens 20° aufnimmt. Die relative Neigung der ersten Kameras zueinander ist so gewählt, daß alle ersten Kameras gemeinsam einen Bildwinkel von über 40° in zwei zueinander senkrechten Richtungen senkrecht zur Symmetrieachse (9) erfassen.

Die Objektive der zweiten Kameras (10,11) sind so ausgelegt, daß alle zweiten Kameras gemeinsam einen Bildwinkel von über 50° in zwei zueinander senkrechten Richtungen senkrecht zur Symmetrieachse (9) erfassen.

Durch das Kamerasystem gemäß der vorliegenden Erfindung wird eine optimal kompakte Anordnung der einzelnen Kameras erreicht. Das vereinigte Sehfeld sowohl der ersten Kameras als auch der zweiten Kameras gewährleistet dabei eine hundertprozentige Bodenabdeckung, d.h., zwischen den einzelnen Öffnungskegeln existiert kein nicht erfaßter Winkelbereich.

Wegen der kompakten Bauweise und dem dadurch resultierenden geringen Platzbedarf gewährleistet die erfindungsgemäße Anordnung der Kameras auch eine hohe Stabilität hinsichtlich Schwingungen und Temperaturverhalten in Folge kurzer Abstände der einzelnen Kameras untereinander.

Die Abstände der ersten Kameras untereinander sind bei der beschriebenen Anordnung größer als die Abstände der zweiten Kameras untereinander.

## Patentansprüche

1. Kamerasystem mit mindestens zwei ersten digitalen panchromatischen Kameras, die jeweils ein eigenes Objektiv aufweisen, deren optische Achsen geneigt zueinander angeordnet sind und mit mindestens zwei zweiten digitalen multichromatischen Kameras, die in Richtung der Blickrichtung der ersten Kameras im Abstand von den ersten Kameras angeordnet sind, wobei die zweiten Kameras in einem Bereich angeordnet sind, in dem die die Öffnungskegel der ersten Kameras kleinste Einhüllende eine Einschnürung oder einen Bereich konstanten Durchmessers aufweist, und wobei die Öffnungskegel der ersten und zweiten Kameras einen gemeinsamen überlappenden Bereich aufweisen.

2. Kamerasystem nach Anspruch 1, wobei mindestens drei erste Kameras symmetrisch zu einer Symmetrieachse angeordnet sind und die zweiten Kameras in Richtung dieser Symmetrieachse versetzt zu den ersten Kameras angeordnet sind.

3. Kamerasystem nach Anspruch 2, wobei mindestens vier erste Kameras vorgesehen sind.

4. Kamerasystem nach einem der Ansprüche 1 - 3, wobei vier zweite Kameras vorgesehen sind.

5. Kamerasystem nach Anspruch 2, 3 oder 4, wobei die zweiten Kameras symmetrisch zur Symmetrieachse der ersten Kameras angeordnet sind.

6. Kamerasystem nach einem der Ansprüche 1 - 5, wobei die optischen Achsen der Objektive der zweiten Kameras parallel zueinander ausgerichtet sind.

## Claims

1. Camera system having at least two first digital panchromatic cameras, each of which has its own objective and the optical axes of which are arranged mutually inclined, and having at least two second digital multichromatic cameras, which are arranged at a distance from the first cameras in the direction of the viewing direction of the first cameras, wherein the second cameras are arranged in a region in which the smallest envelope of the aperture cones of the first cameras comprises an indentation or a region of constant diameter, and wherein the aperture cones of the first and second cameras comprise a common overlapping region.

2. Camera system according to Claim 1, wherein at least three first cameras are arranged symmetrically with respect to a symmetry axis and the second cameras are arranged offset from the first cameras in the direction of this symmetry axis.

3. Camera system according to Claim 2, wherein at least four first cameras are provided.

4. Camera system according to one of claims 1 - 3, wherein four second cameras are provided.

5. Camera system according to Claim 2, 3 or 4, wherein the second cameras are arranged symmetrically with respect to the symmetry axis of the first cameras.

6. Camera system according to one of claims 1 - 5 wherein the optical axes of the objectives of the second cameras are aligned mutually parallel.

## Revendications

1. Système d'appareils photographiques comprenant au moins deux premiers appareils photographiques numériques panchromatiques comportant chacun un objectif propre dont les axes optiques sont inclinés l'un par rapport à l'autre, et au moins deux seconds appareils photographiques numériques multi-chromatiques qui sont disposés à distance des premiers dans la direction de la visée des premiers appareils photographiques, dans lequel les seconds appareils sont disposés dans une région dans laquelle la plus petite enveloppante des cônes d'ouverture des premiers appareils photographiques présente un rétrécissement ou une région de diamètre constant, et dans lequel les cônes d'ouverture des premiers et seconds appareils photographiques présentent une région de recouvrement commune.

2. Système d'appareils photographiques selon la revendication 1, dans lequel au moins trois premiers appareils photographiques sont disposés symétriquement par rapport à un axe de symétrie et les seconds appareils photographiques sont décalés par rapport aux premiers appareils photographiques dans la direction de cet axe de symétrie.

3. Système d'appareils photographiques selon la revendication 2, dans lequel il est prévu au moins quatre premiers appareils photographiques.

4. Système d'appareils photographiques selon l'une des revendications 1 à 3, dans lequel il est prévu quatre seconds appareils photographiques.

5. Système d'appareils photographique selon la revendication 2, 3 ou 4, dans lequel les seconds appareils photographiques sont disposés symétriquement par rapport à l'axe de symétrie des premiers appareils.

6. Système d'appareils photographiques selon l'une des revendications 1 à 5, dans lequel les axes optiques des objectifs des seconds appareils photographiques sont dirigés parallèlement entre eux.
